# EUROPÄISCHE PATENTSCHRIFT

(11) **EP 4 052 551 B1**
(45) Veröffentlichungstag und Bekanntmachung des Hinweises auf die Patenterteilung: **29.11.2023**
(21) Anmeldenummer: 21161083.7
(22) Anmeldetag: 05.03.2021
(51) Int. Cl.: A01B 39/16, A01B 39/18, A01B 39/20, A01G 17/00

(54) **LANDWIRTSCHAFTLICHE MASCHINE MIT EINEM BODENBEARBEITUNGSWERKZEUG UND VERFAHREN ZUR STEUERUNG EINES BODENBEARBEITUNGSWERKZEUGES**
AGRICULTURAL MACHINE WITH A SOIL WORKING TOOL AND METHOD FOR CONTROLLING A SOIL WORKING TOOL
MACHINE AGRICOLE DOTÉ D'UN OUTIL DE TRAITEMENT DU SOL ET PROCÉDÉ DE COMMANDE D'UN OUTIL DE TRAITEMENT DU SOL

(43) Veröffentlichungstag der Anmeldung: 07.09.2022
(73) Patentinhaber: Clemens GmbH & Co. KG, Weinbautechnik - Getränketechnik, 54516 Wittlich (DE)
(72) Erfinder: CLEMENS, Bernhard, 54533 Greimerath (DE)
(74) Vertreter: Hannke, Christian

(56) Entgegenhaltungen:
- EP-A1- 2 062 472
- DE-A1- 3 546 288
- FR-A1- 2 555 860
- US-A- 3 117 632
- US-A- 4 384 618

## Beschreibung

Die Erfindung betrifft eine landwirtschaftliche Maschine, zur Anordnung an einem landwirtschaftlichen Fahrzeug, wobei bei Bewegung der Maschine in Fahrtrichtung F ein Bodenbereich, zumindest zwischen parallel zur Fahrtrichtung angeordneten Pflanzen, in Reihenkulturen mit der Maschine bearbeitbar ist, wobei die Maschine ein Bodenbearbeitungswerkzeug, welches um eine in eine Höhenrichtung der Maschine verlaufende Drehachse aus einer senkrecht zur Fahrtrichtung und senkrecht zur Höhenrichtung angeordneten Querrichtung entgegengesetzt zur Fahrtrichtung zurückschwenkbar und/oder in Querrichtung (Q) zur Maschine (1) hinbewegbar ist, ein Hindernissensor, mit welchen Hindernisse, insbesondere Pflanzen und Pflanzstöcke der Reihenkultur, detektierbar sind, sowie eine Steuerungsvorrichtung umfasst, wobei das Bodenbearbeitungswerkzeug durch die Steuerungsvorrichtung bei Detektion eines Hindernisses aus der Querrichtung entgegengesetzt zur Fahrtrichtung zurückschwenkbar und/oder in Querrichtung (Q) zur Maschine (1) hinbewegbar ist.

Landwirtschaftliche Maschinen dieser Art finden regelmäßig Anwendung im Obst- und Weinbau. Hierbei ist es erforderlich den Boden auch zwischen den Pflanzen der Reihenkultur zu bearbeiten. Damit dies mit einem landwirtschaftlichen Fahrzeug, welches an einer Pflanzenreihe einer Reihenkultur entlang fährt, möglich ist, verfügen die landwirtschaftlichen Fahrzeuge über eine oder mehrere landwirtschaftliche Maschinen wie zuvor beschrieben. Durch die Zurückschwenkbarkeit des Bodenbearbeitungswerkzeuges bei Detektion eines Hindernisses wird verhindert, dass das Bodenbearbeitungswerkzeug mit den Pflanzen der Reihenkulturen, oder mit sonstigen Hindernissen, kollidiert.

Das Bodenbearbeitungswerkzeug ist bevorzugt als seitlicher Ausleger der landwirtschaftlichen Maschine angeordnet. Dies bedeutet, dass mit dem Bodenbearbeitungswerkzeug ein Bodenbereich neben der Fahrspur des landwirtschaftlichen Fahrzeugs bearbeitbar ist. Dieser Bodenbereich ist insbesondere ein Bodenbereich zwischen den Pflanzen einer Pflanzreihe in einer Reihenkultur. Viele Pflanzen insbesondere Weinreben, als auch viele Obstpflanzen reagieren sehr empfindlich auf das Anfahren des Stammes der Pflanze mit einem Bodenbearbeitungswerkzeug. Dies wird durch die Hinderniserkennung und das Zurückschwenken des Bodenbearbeitungswerkzeugs bei Erkennung eines Hindernisses verhindert. Auch wird so verhindert, dass das Wurzelwerk der Pflanze durch das Bodenbearbeitungswerkzeug beschädigt wird. Die Hinderniserkennung erfolgt in der Regel durch einen dem Bodenbearbeitungswerkzeug voreilenden Sensor. Der Sensor erkennt das Hindernis und löst somit das Zurückschwenken aus. Nach einer gewissen Zeit, welche bei konstanter Fahrgeschwindigkeit einer bestimmten Wegstrecke entspricht, schwenkt das Bodenbearbeitungswerkzeug automatisch wieder in seine Ausgangslage zurück.

Diese landwirtschaftlichen Maschinen geraten jedoch bei Steigungen des Bodens in der Reihenpflanzung an Ihre Grenzen. Pflanzen wachsen immer parallel zu einer vertikalen Richtung, welche auf den Erdmittelpunkt zuläuft. In einer Steigung wachsen die Pflanzen somit in einem Winkel zur Bodennormale. Hier kann es passieren, dass durch die Steigung und der damit verbundenen effektiven Schrägstellung der Pflanzen im Vergleich zu einer Bodennormale der Sensor zu früh oder zu spät auslöst und somit das Bodenbearbeitungswerkzeug nicht rechtzeitig zurückgeschwenkt wird oder zu früh zurückgeschwenkt wird, sodass es zu einer Kollision zwischen Bodenbearbeitungswerkzeug und Hindernis kommen kann. Solche Kollisionen sind zu vermeiden, da das Bodenbearbeitungswerkezug und auch die Reihenkultur beschädigt werden können. Zusätzlich ergibt sich bei einem zu späten oder zu frühem Zurückschwenken ein unbearbeiteter Bodenbereich hinter bzw. vor der Pflanze, was ebenfalls unerwünscht ist.

In der Druckschrift FR 2 555 860 A1 wird bereits ein System offenbart, bei welchem ein Hindernissensors manuell eingestellt werden kann, sodass er bezüglich des Bodenbearbeitungswerkzeugs weiter in Fahrtrichtung nach vorne oder hinten verschoben werden kann. Dadurch kann ein Bodenbearbeitungswerkzeug mit einem geringeren Abstand um Pflanzen in der Reihenkultur herum geführt werden und dadurch ein nicht bearbeiteter Bodenbereich zwischen Pflanzen minimiert werden. Die Justierung des Hindernissensors erfolgt jedoch mechanisch und manuell und muss demnach bei wechselnden Hanglagen stets nachjustiert werden, was vor allem unter Betrachtung der benötigten Zeit zum Justieren nicht zufriedenstellend ist.

Es ist daher die Aufgabe der vorliegenden Erfindung eine landwirtschaftliche Maschine bereitzustellen, mit welcher eine Bodenbearbeitung zwischen parallel zur Fahrtrichtung angeordneten Pflanzen in Reihenkulturen möglich ist, ohne dass bei Steigungen die Gefahr einer Kollision zwischen Bodenbearbeitungswerkzeug und Reihenkultur besteht. Diese Aufgabe wird gelöst durch eine landwirtschaftliche Maschine gemäß dem Anspruch 1 sowie ein Verfahren zum Steuern eines Bodenbearbeitungswerkzeugs nach Anspruch 12.

Die Erfindung ist dadurch gekennzeichnet, dass die Steuerungsvorrichtung der landwirtschaftlichen Maschine eine Verzögerungsvorrichtung, welche das Zurückschwenken bzw. das Hinbewegen zur Maschine nach Detektion eines Hindernisses verzögert, und eine Einstellvorrichtung umfasst, wobei mit der Einstellvorrichtung ein Betrag der Zeitverzögerung der Zeitverzögerungsvorrichtung während einer Bodenbearbeitungsfahrt einstellbar ist. Durch die Einstellbarkeit des Betrages der Zeitverzögerung während der Bodenbearbeitungsfahrt, kann der Betrag der Zeitverzögerung jederzeit an die aktuelle Steigung entlang der Reihenkultur angepasst werden. Die Einstellmöglichkeit ist erfindungsgemäß während der Bodenbearbeitungsfahrt gegeben. Dies bedeutet, dass die Bodenbearbeitung zum Einstellen des Zeitverzögerungsbetrags nicht unterbrochen werden muss.

Der Begriff Reihenpflanzung im Sinne dieser Erfindung beschreibt jegliche reihenförmige Anordnung von Nutzpflanzen.

Bei der Schwenkbewegung findet eine Drehung des Bodenbearbeitungswerkzeugs um eine in eine Höhenrichtung der Maschine verlaufende Drehachse statt, wobei das Bodenbearbeitungswerkezug aus einer senkrecht zur Fahrtrichtung und senkrecht zur Höhenrichtung angeordneten Querrichtung entgegengesetzt zur Fahrtrichtung zurückgeschwenkt wird. Alternativ hierzu ist es denkbar, dass statt der Schwenkbewegung eine Linearbewegung des Bodenbearbeitungswerkzeugs hin zur Maschine stattfindet. In dieser Variante wird das Bodenbearbeitungswerkzeug bevorzugt in Querrichtung und aus seiner Position als Ausleger zur Maschine hin bewegt. Hierbei ist auch denkbar, dass das Bodenbearbeitungswerkzeug in die Maschine eingezogen wird. Außerdem denkbar ist eine Kombination aus Schwenk- und Linearbewegung des Bodenbearbeitungswerkzeugs. Wenn im Folgenden von einem Zurückschwenken oder einer Schwenkbewegung des Bodenbearbeitungswerkzeugs gesprochen wird, ist auch immer eine alternative Linearbewegung oder einer Kombination von Linear- und Schwenkbewegung denkbar.

Das Bodenbearbeitungswerkzeug umfasst bevorzugt ein Schar, welches durch Unterschneidung 30-50 mm unter der Erdoberfläche Unkraut unterschneidet und somit wirksam bekämpft. Je nach Anwendungsbereich kann auch eine Unterschneidung von bis zu 250 mm angewendet werden. Bevorzugt umfass das Bodenbearbeitungswerkzeug neben dem Schar noch weitere Werkzeugkomponenten, z.B. Kreisel, Pflüge oder Grubber, aber auch alle anderen Arten von bekannten Werkzeugkomponenten sind denkbar.

Hierbei ist auch denkbar, dass ein Zeitverzögerungsbetrag von null Sekunden einstellbar ist. In diesem Fall würde das zurück schwenken des Bodenbearbeitungswerkzeuges nach Detektion eins Hindernisses nicht durch die Verzögerungsvorrichtung verzögert werden. Es ist jedoch denkbar, dass eine permanente systemimmanente Verzögerung zwischen Detektion eines Hindernisses und Zurückschwenkung des Bodenbearbeitungswerkezeuges vorliegt, sodass es denkbar ist zur Einstellung einer minimalen Zeitverzögerung einen Zeitverzögerungsbetrag in der Verzögerungseinrichtung von null Sekunden einzustellen.

Bevorzugt bearbeitet das Bodenbearbeitungswerkzeug im zurückgeklappten Zustand einen schmaleren Bodenbereich (gemessen entlang der Querrichtung) als in der Ausgangslage. Durch das Zurückklappen des Bodenbearbeitungswerkzeugs zur landwirtschaflichen Maschine hin und weg von den Pflanzen der Reihenkultur (betrachtet entlang der Querrichtung) liegt der schmalere Bodenbereich direkt neben der Fahrspur der landwirtschaftlichen Maschine ist aber von der Reihenpflanzung bezüglich der Querrichtung beabstandet. So wird eine Kolllision zwischen Bodenbearbeitungswerkzeug und den Pflanzen der Reihenpflanzung wirksam verhindert.

Es ist außerdem denkbar, dass das Bodenbearbeitungswerkzeug die Bodenbearbeitung automatisch stoppt, sowie es zurückgeklappt wird. Bevorzugt setzt das Bodenbearbeitungswerkzeug in dieser Ausführungsform die Bodenbearbeitung automatisch fort sowie es in seine Ausgangslage zurückkehrt.

Gemäß zumindest einer weiteren Ausführungsform ist die Verzögerungsvorrichtung als Regelelektronik ausgeführt. Mit der Regelelektronik kann ein Signal, welches bei Detektion eines Hindernisses mit dem Hindernissensor generiert wird, vor der Weitergabe an die Ansteuerung des Bodenbearbeitungswerkzeuges verzögert werden. Die Regelelektronik ist Bestandteil der Steuerungsvorrichtung. Bevorzugt ist die Verzögerungsvorrichtung elektronisch ausgeführt. Es ist jedoch auch eine elektrische oder hydraulische Ausführung denkbar.

Gemäß zumindest einer weiteren Ausführungsform wird in der Steuerungsvorrichtung neben den Signalen des Hindernissensors auch die aktuelle Fahrgeschwindigkeit des Fahrzeugs, die Zeit und die aktuelle Position des Bodenbearbeitungswerkzeugs erfasst. Zusätzlich ist in der Steuerungsvorrichtung ein Distanzwert hinterlegt. Dieser Distanzwert definiert in welchem Abstand vor einem detektierten Hindernis das Bodenbearbeitungswerkzeug zurückgeschwenkt werden soll. Bevorzugt definiert dieser Distanzwert ebenfalls in welchem Abstand nach einem detektierten Hindernis das Bodenbearbeitungswerkzeug wieder zurückgeschwenkt wird. Die aktuelle Position des Bodenbearbeitungswerkzeugs beinhaltet bevorzugt auch eine Eintauchtiefe des Bodenbearbeitungswerkzeugs in den Boden, in anderen Worten die Unterschneidungstiefe. Bevorzugt ist der Distanzwert 100 mm.

Die Geschwindigkeit kann auch ohne Erfassung der anderen zuvor genannten Parameter erfolgen. In diesem Fall umfasst die landwirtschaftliche Maschine einen Geschwindigkeitssensor, wobei mit der Einstellvorrichtung der Zeitverzögerungsbetrag zusätzlich zur Abhängigkeit vom Hangwinkel auch in Abhängigkeit von der gemessenen Geschwindigkeit automatisch und dynamisch einstellbar ist.

Auf Basis aller dieser Informationen berechnet die Steuerungsvorrichtung einen aktuellen Zeitverzögerungswert, welcher dann mit der Einstellvorrichtung in der Verzögerungsvorrichtung eingestellt wird. So wird sichergestellt, dass das Zurückschwenken immer im gewünschten optimalen Abstand zum Hindernis erfolgt.

Es ist denkbar, dass der Distanzwert vom Benutzer der Maschine einstellbar ist. Bevorzugt ist dies nur in einem gesonderten Bereich und/oder einem geschützten Bereich der Bedienschnittstelle, z.B. in einem Experten-Bedienmodus, möglich.

Auch ist es denkbar, dass das Zurückschwenken des Bodenbearbeitungswerkzeugs, je nach Art des Signals des Hindernissensors, nur teilweise erfolgt. Dadurch wird sichergestellt, dass das Bodenbearbeitungswerkzeug nur soweit bewegt wird wie nötig, um eine Kollision zu vermeiden. In dieser Ausführungsform erfasst die Steuerungsvorrichtung auch die Position des Bodenbearbeitungswerkzeugs und die Art des Hindernissensorsignals (z.B. den Winkel der Auslenkung bei einem drehbaren Taststab)

Gemäß zumindest einer weiteren Ausführungsform umfasst die Steuerungsvorrichtung eine Schwenkvorrichtung, mit welcher das Bodenbearbeitungswerkzeug schwenkbar ist, oder eine lineare Schiebeeinheit, mit welcher das Bodenbearbeitungswerkzeug bewegbar ist, und einen steuerbaren Signalgeber, mit welcher die Schwenkvorrichtung ansteuerbar ist, wobei der Signalgeber lediglich mittelbar über die Verzögerungsvorrichtung mit dem Hindernissensor verbunden ist. Das Signal des Hindernissensors wird also immer zuerst an die Verzögerungsvorrichtung übermittelt und dann weiter an die Ansteuerung des Bodenbearbeitungswerkzeuges, bestehend aus dem Signalgeber und der Schwenkvorrichtung, weitergegeben. Durch die Verzögerungsvorrichtung wird das Signal verzögert an den Signalgeber weitergegeben, sodass nach Detektion eines Hindernisses mit dem Hindernissensor eine verzögerte Ansteuerung des Signalgebers erfolgt, wobei die Dauer der Verzögerung dem eingestellten Zeitverzögerungsbetrag in der Zeitverzögerungsvorrichtung entspricht. Bevorzugt ist der Signalgeber als Elektromagnetventil ausgeführt. Bevorzugt ist die Schwenkvorrichtung ein einfach oder doppeltwirkender Hydraulikzylinder, es ist jedoch auch denkbar andere Schwenkantriebe, wie zum Beispiel einen Servomotor, einen Radialkolbenmotor oder ähnliche Antriebe zu verwenden.

Gemäß zumindest einer weiteren Ausführungsform ist mit der Einstellvorrichtung der Zeitverzögerungsbetrag kontinuierlich innerhalb eines Intervalls einstellbar. Bevorzugt ist eine untere Grenze des Intervalls null Sekunden. Bevorzugt ist von diesem unteren Wert aus jeder positive Wert kontinuierlich einstellbar.

Gemäß einer bevorzugten Ausführungsform, ist die Einstellvorrichtung mit einem während der Bodenbearbeitungsfahrt manuell betätigbarem Regler steuerbar. Bevorzugt ist dieser Regler in einer Fahrerkabine des landwirtschaftlichen Fahrzeugs angeordnet. Der Führer der Bodenbearbeitungsmaschine kann somit während der Fahrt den Regler betätigen und einen Regelwert, welcher eine Bergfahrt, eine Talfahrt oder eine Fahrt in der Ebene abbildet, einstellen. Bevorzugt bildet der Regelwert auch die jeweilige Steigung ab. Der Regler ist bevorzugt als Rastschalter ausgeführt, welcher in drei Positionen eingestellt werden kann. Bevorzugt weisen diese Positionen entsprechende Kennzeichnung einer Bergauf-, Bergab- und Fahrt in der Ebene auf.

In einer anderen bevorzugten Ausführungsform, in welcher der Regelwert die jeweilige Steigung abbildet, ist der Regler als Dreh- oder Schieberegler ausgeführt. Es ist jedoch auch eine rein elektronische Ausführung des Reglers denkbar, beispielsweise als Touchscreen.

Gemäß zumindest einer weiteren Ausführungsform umfasst die Maschine weitergehend einen Lagesensor, mit welchem ein Hangwinkel in Fahrtrichtung fortlaufend messbar ist, wobei mit der Einstellvorrichtung der Betrag der Zeitverzögerung automatisch und dynamisch in Abhängigkeit des Hangwinkels einstellbar ist. Durch den Lagesensor ist eine manuelle Einstellung der Zeitverzögerung durch den Fahrzeugführer nicht mehr notwendig. Vielmehr erfolgt die Einstellung der Zeitverzögerung nun vollautomatisch, der Lagesensor erfasst den Hangwinkel. In Abhängigkeit dieses fortlaufend erfassten Hangwinkels wird dann der Zeitverzögerungsbetrag eingestellt. Dies erfolgt mit der Einstellvorrichtung vollautomatisch. Somit wird sichergestellt, dass jederzeit der optimale Zeitverzögerungsbetrag in der Verzögerungsvorrichtung eingestellt ist. Hierdurch wird eine Kollision der Bodenbearbeitungsvorrichtung mit einem Hindernis besonders effektiv vermieden. Der Lagesensor kann als Winkelsensor, als Gyrosensor oder auch als GPS-basierter Sensor ausgeführt sein, grundsätzlich ist aber auch jede andere geeignete Messung des Hangwinkels in Fahrtrichtung denkbar.

Gemäß einer bevorzugten Ausführungsform ist der Lagesensor an der Schwenkvorrichtung oder der Schiebeeinheit des Bodenbearbeitungswerkzeugs angeordnet. Durch die Anordnung des Lagesensors an der Schwenkvorrichtung oder der Schiebeeinheit erfolgt eine besonders genaue Erfassung des Lagewinkels sehr nah am Bodenbearbeitungswerkzeug. An dieser Position wird der momentane Hangwinkel des Bodenbearbeitungswerkzeuges besonders exakt erfasst, sodass eine besonders exakte Einstellung des Zeitverzögerungsbetrages so möglich ist. Es ist auch denkbar, dass der Lagesensor an der landwirtschaftlichen Maschine oder am landwirtschaftlichen Fahrzeug angeordnet ist.

Gemäß einer bevorzugten Ausführungsform ist der Hindernissensor als mechanischer Taster ausgeführt, wobei eine Detektion eines Hindernisses bei Überschreitung einer Mindestbetätigung des Tasters erfolgt.

Gemäß einer bevorzugten Ausführungsform ist der Taster als von der Fahrtrichtung in die Querrichtung und parallel zu einem Boden rotierbarer Stab ausgeführt, wobei die Mindestbetätigung einem Mindestdrehwinkel einspricht. Bevorzugt eilt der mechanische Taster den Bodenbearbeitungswerkzeug vor, wobei das Voreilen in Bezug auf die Fahrrichtung betrachtet wird. Bevorzugt ist die Voreilung des rotierbaren Stabs über eine Lochscheibe mit Rastbolzen einstellbar. Über die Voreilung ist die Position der unbearbeitet bleibenden Insel um ein Hindernis herum einstellbar, welche durch den zurückgelegten Weg mit zurückgeklapptem Bodenbearbeitungswerkzeug entsteht. Durch die Verzögerungsvorrichtung wird diese Position der unbearbeiteten Insel um ein Hindernis herum auch in einer Hanglage sichergestellt. Bevorzugt wir bei einem sehr großen Betrag des Hangwinkels - also sehr steilen Lagen - die Größe der unbearbeiteten Insel automatisch erhöht. Die erfolgt in Abhängigkeit von der Fahrgeschwindigkeit durch noch früheres zurückklappen und gleichzeitig noch späteres Vorklappen des Bodenbearbeitungswerkzeugs zurück in die Ausgangsposition. Die Ausführung des Hindernissensors als mechanischer Taster oder als rotierbarer Stab, stellt eine besonders einfache und bewährte, sowie robuste Ausführung des Hindernissensors dar.

Gemäß einer weiteren Ausführungsform ist der Hindernissensor als kontaktloser Sensor ausgeführt. Bevorzugt ist der kontaktlose Sensor ein Ultraschallsensor, ein Lasersensor, ein 3D-Lasersensor, ein Kamerasystem oder ein satellitengestütztes System zur Positionsermittlung (beispielsweise GPS, DGPS, Glonass, Galieo, Beidoou oder andere) mit hinterlegten Kartendaten oder ein digitales Triangulationssystem zur Positionsermittlung. Hierbei sind jedoch auch weitere kontaktlose Sensorsysteme denkbar. Durch die Ausführung des Hindernissensors als kontaktloser Sensor wird eine Berührung des Hindernisses komplett vermieden. Dies kann insbesondere in Obstreihenpflanzungen von Vorteil sein, da einige Obstpflanzen besonders empfindlich auf ein Anfahren reagieren. Auch werden gegebenenfalls fragile Vorrichtungen wie dünne Stäbe oder Drähte, welche zur Reihenerziehung der Pflanzen verwendet werden und ebenfalls Hindernisse darstellen können, geschont.

Die Erfindung ist außerdem durch ein Verfahren zum Steuern eines Bodenbearbeitungswerkzeugs einer landwirtschaftlichen Maschine nach zumindest einem einer der hervorgehenden Ausführungsformen gekennzeichnet. Das Verfahren umfasst die Schritte:
a. Einstellen des Zeitverzögerungsbetrags zwischen der Detektion eines Hindernisses und dem Zurückschwenken und/oder Hinbewegen des Bodenbearbeitungswerkzeuges mithilfe der Einstellvorrichtung während einer Bodenbearbeitungsfahrt;
b. Detektion eines Hindernisses mit dem Hindernissensor;
c. Zeitliche Verzögerung des Zurückschwenkens und/oder Hinbewegen des Bodenbearbeitungswerkzeugs mit Hilfe der Verzögerungsvorrichtung um den zuvor eingestellten Zeitverzögerungsbetrags;
d. Zurückschwenken und/oder Hinbewegen des Bodenbearbeitungswerkzeugs mithilfe der Steuerungsvorrichtung.

Erfindungsgemäß ist das Einstellen eines Betrages der Zeitverzögerung während einer Bodenbearbeitungsfahrt jederzeit möglich und zwar unabhängig davon, ob nach dem letzten Einstellen eine Detektion eines Hindernisses stattgefunden hat oder nicht. Es ist also denkbar, dass der Schritt a zunächst mehrfach ausgeführt wird, bevor die Schritte b- d ausgeführt werden. Andersherum ist es auch denkbar, dass nach Ausführung der Schritte b - d die Schritte b - d mehrfach hintereinander ausgeführt werden, bevor eine neue Ausführung des Schrittes a erfolgt.

Gemäß einer bevorzugten Ausführungsform erfolgt das Einstellen des Betrages der Zeitverzögerung während der Bodenbearbeitungsfahrt an der Einstellvorrichtung in Abhängigkeit eines durch einen Führer der landwirtschaftlichen Maschine (1) manuell eingestellten Regelwert erfolgt. In dieser Ausführungsform stellt der Führer der landwirtschaftlichen Maschine in Schritt a zunächst einen Regelwert manuell während der Bodenbearbeitungsfahrt ein. Ein solcher Regelwert entspricht bevorzugt einem der drei diskreten Zustände Bergfahrt, Talfahrt oder Fahrt in der Ebene. Alternativ ist es auch denkbar, dass der Regelwert kontinuierlich zwischen einer Bergfahrt mit maximalem Steigungswinkel und einer Talfahrt mit maximalem Neigungswinkel ist. In diesem Fall kann der Steigungs- bzw. Neigungswinkel durch den Regelwert abgebildet werden. Dies kann wie zuvor beschrieben durch einen Regler oder Schalter erfolgen, wobei auch andere manuelle Einstellmöglichkeiten, wie zum Beispiel ein Touchscreen denkbar sind.

Gemäß einer bevorzugten Ausführungsform umfasst die landwirtschaftliche Maschine einen Lagesensor, mit welchem ein Hangwinkel in Fahrtrichtung fortlaufend gemessen wird und der Betrag der Zeitverzögerung fortlaufend automatisch in Abhängigkeit des Hangwinkels mit der Einstellvorrichtung eingestellt wird. Diese Ausführungsform ist alternativ zu der zuvor beschriebenen Ausführungsform. In dieser Ausführungsform wird der Regelwert nicht manuell durch den Führer der landwirtschaftlichen Maschine eingestellt, sondern die Berechnung und Einstellung der Zeitverzögerung erfolgt automatisch in Abhängigkeit des gemessenen Hangwinkels. Hierbei wird bevorzugt der aktuelle gemessene Hangwinkel an die Steuerungsvorrichtung und anschließend der erforderliche Zeitverzögerungsbetrag ermittelt und mit Hilfe der Einstellvorrichtung in der Verzögerungsvorrichtung automatisch eingestellt.

Gemäß einer bevorzugten Ausführungsform wird, im Vergleich zum eingestellten Zeitverzögerungsbetrag bei ebener Fahrt und konstanter Fahrgeschwindigkeit, bei einer Bergauffahrt der Zeitverzögerungsbetrag mit Hilfe der Einstellvorrichtung verringert und bei einer Bergabfahrt der Zeitverzögerungsbetrag mit Hilfe der Einstellvorrichtung vergrößert. Durch diese Art der Einstellung des Zeitverzögerungsbetrags wird bei jeder Steigung ein Zurückschwenken des Bodenbearbeitungswerkzeuges in einem konstanten Abstand des Bodenbearbeitungswerkzeuges zum Hindernis gewährleistet.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine Übersichtsdarstellung der landwirtschaftlichen Maschine 1 angeordnet an einem landwirtschaftlichen Fahrzeug 2 bei der Bodenbearbeitung in einer Reihenkultur 5 in Seitenansicht;
- Fig. 2: eine Darstellung der landwirtschaftlichen Maschine 1 an einem landwirtschaftlichen Fahrzeug 2 bei der Bodenbearbeitung in der Reihenkultur 5 in Aufsicht;
- Fig. 3a - c:: eine schematische Darstellung des Bodenbearbeitungswerkzeuges 6 und des Hindernissensors 7 bei drei verschiedenen Hangwinkeln des Bodens;
- Fig. 4:: eine schematische Organigramm-Darstellung der Steuerungsvorrichtung 8 mit dem Hindernissensor 7, dem Lagesensor 9 und dem Bodenbearbeitungswerkzeug 6;

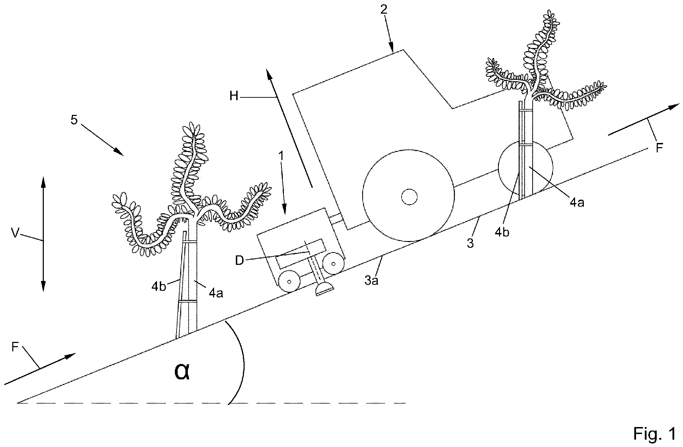

Figur 1 zeigt die landwirtschaftliche Maschine 1 welche an einem landwirtschaftlichen Fahrzeug 2 angeordnet ist während der Bodenbearbeitung in Fahrtrichtung F. Das landwirtschaftliche Fahrzeug ist bevorzugt ein beliebiges landwirtschaftliches Zugfahrzeug, besonders bevorzugt ein Geräteträger, beispielsweise aber nicht abschließend ein Traktor, insbesondere ein Schlepper, ein Schmalspurtraktor, ein Hochradschlepper, eine Raupe, ein Unimog oder ein autonomer Geräteträger. Die landwirtschaftliche Maschine 1 wird von dem landwirtschaftlichen Fahrzeug 2 über den Boden 3 bewegt. Dabei wird mit der landwirtschaftlichen Maschine 1 mit Hilfe des Bodenbearbeitungswerkzeuges 6 ein Bodenbereich 3a bearbeitet. Dieser Bodenbereich 3a ist zumindest teilweise zwischen Pflanzen 4a einer Reihenkultur 5 angeordnet.

Das landwirtschaftliche Fahrzeug 2 zieht in der dargestellten Ausführungsform das Bodenbearbeitungswerkzeugs an der landwirtschaftlichen Maschine 1 über den Boden 3. Es ist jedoch auch denkbar, dass die landwirtschaftliche Maschine 1 vorne oder seitlich am landwirtschaftlichen Fahrzeug 2 angeordnet ist. Die landwirtschaftliche Maschine kann somit an der Front, an dem Heck und/oder in einem Zwischenachsbereich des Fahrzeugs angeordnet sein. Die Figur 1 zeigt eine Reihenkultur 5 welche sich an einem Hang befindet. Das landwirtschaftliche Fahrzeug 2 mit der landwirtschaftlichen Maschine 1 fährt in der dargestellten Abbildung den Hang hinauf. Insofern liegt hier ein positiver Hangwinkel α in Fahrtrichtung F vor.

Die Pflanzen 4a wachsen nicht etwa senkrecht zum Boden 3, sondern vielmehr senkrecht nach oben in Bezug auf eine vertikale Richtung V, welche auf den Erdmittelpunkt zuläuft. Die Pflanzen 4a einer Reihenkultur 5 weisen häufig weitere Hilfsmittel auf, welche der Reihenerziehung der Pflanzen 4a dienen. Solche Hilfsmittel können insbesondere Pflanzstöcke 4b sein oder auch andere Hilfsmittel wie Stützpfeiler oder Drähte (hier nicht gezeigt).

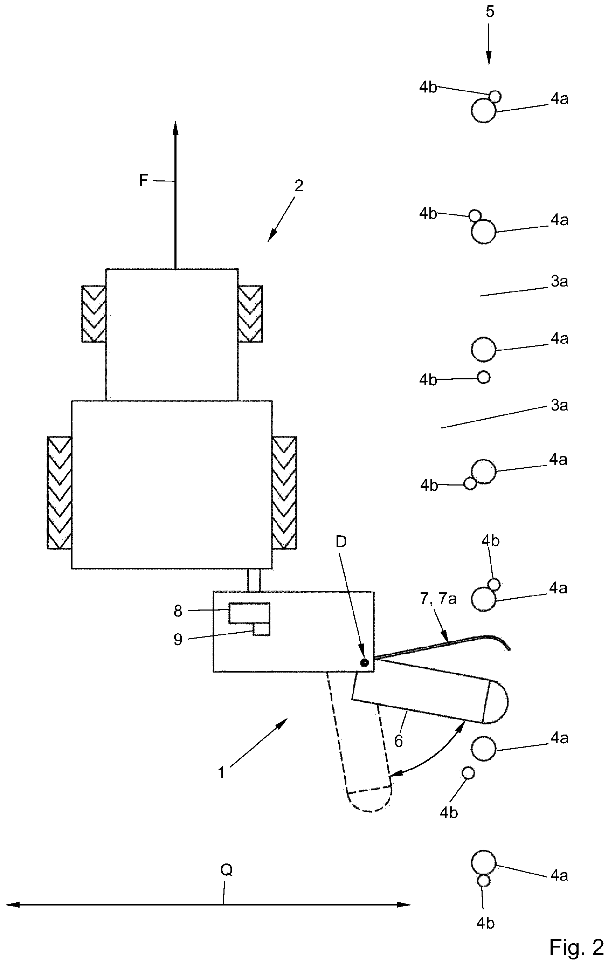

Figur 2 zeigt dieselbe Ausführungsform der landwirtschaftlichen Maschine 1 mit dem landwirtschaftlichen Fahrzeug 2 in Aufsicht. In dieser Aufsichtsdarstellung ist zu erkennen, dass das Bodenbearbeitungswerkzeug 6 als seitlicher Ausleger an der landwirtschaftlichen Maschine 1 angeordnet ist. Dadurch ist eine Bodenbearbeitung durch das Bodenbearbeitungswerkzeug 6 neben der Fahrspur des landwirtschaftlichen Fahrzeugs 2 möglich. Insbesondere ist es so möglich, dass bei Entlangfahren mit dem landwirtschaftlichen Fahrzeug 2 an einer Reihenkultur 5 ein Bodenbereich 3a zwischen den Pflanzen 4a mit dem Bodenbearbeitungswerkzeug 6 bearbeitbar ist. Um die Pflanzen 4a jedoch nicht zu beschädigen, ist es notwendig das Bodenbearbeitungswerkzeug 6 vor einer Kollision mit einer Pflanze 4a oder einem anderem beliebigen Hindernis 4 zurückzuschwenken.

Das Zurückschwenken des Bodenbearbeitungswerkzeuges 6, welches als seitlicher Ausleger in einer Querrichtung Q seitlich aus der landwirtschaftlichen Maschine 1 herausragend angeordnet ist, erfolgt durch Drehung um eine Drehachse D aus der Querrichtung Q nach hinten in eine Richtung welche der Fahrtrichtung F entgegengesetzt ist. Die Drehachse D ist hierbei parallel zu einer Höhenrichtung H angeordnet. Die Höhenrichtung H steht senkrecht auf dem Boden 3, stellt also die Bodennormale dar, und zeigt vom Boden 3 ausgehend nach oben.

Um ein rechtzeitiges Zurückschwenken des Bodenbearbeitungswerkzeuges 6 vor dem Kontakt mit einem Hindernis 4 zu gewährleisten, ist in Fahrtrichtung vor dem Bodenbearbeitungswerkzeug 6 ein Hindernissensor 7 angeordnet. Der Hindernissensor 7 ist entweder als mechanischer Taster 7a oder aber als kontaktloser Sensor (hier nicht gezeigt) ausgeführt. In der hier dargestellten Ausführungsform fällt die Drehachse D des Bodenbearbeitungswerkzeugs 6 mit der Drehachse D des mechanischen Tasters 7a zusammen. Es ist jedoch auch denkbar, dass getrennte Drehachsen vorliegen. In diesem Fall sind die beiden Drehachsen bevorzugt parallel zueinander.

Durch die Anordnung des Hindernissensors 7 in Fahrtrichtung vor dem Bodenbearbeitungswerkzeug 6 ist der Hindernissensor 7 in der Lage, ein Hindernis 4 zu erkennen bevor das Bodenbearbeitungswerkzeug 6 in Kontakt mit dem Hindernis 4 kommt. Das Bodenbearbeitungswerkzeug 6 kann somit rechtzeitig vor Kontakt mit dem Hindernis 4 nach hinten zurückschwenken. Die landwirtschaftliche Maschine 1 passiert dann das Hindernis 4 mit einem, sich im zurückgeschwenkten Zustand befindenden Bodenbearbeitungswerkzeug 6. Nachdem die landwirtschaftliche Maschine 1 mit dem Bodenbearbeitungswerkzeug 6 das Hindernis 4 passiert hat, schwenkt das Bodenbearbeitungswerkzeug 6 automatisch wieder in seine Ausgangsposition als seitlicher Ausleger der landwirtschaftlichen Maschine 1 zurück. Somit wird der Bodenbereich 3a vor und hinter dem Hindernis 4 bearbeitet, wobei ein gewisser Bereich um das Hindernis 4 herum unbearbeitet bleibt.

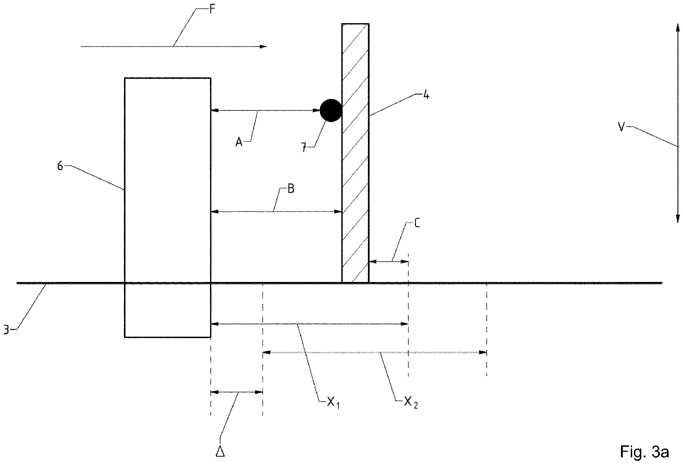

Die Figuren 3a - 3c veranschaulichen die Problematik, welche sich bei einem Hangwinkel ≠ 0° in Fahrtrichtung ergibt. Figur 3a zeigt ein Bodenbearbeitungswerkzeug 6 und einen Hindernissensor 7 bei Fahrt in Fahrtrichtung F in der Ebene auf einem Boden 3. Figur 3a zeigt das Bodenbearbeitungswerkzeug 6 bei Erreichen eines Hindernisses 4 in dem Moment unmittelbar vor dem Zurückschwenken des Bodenbearbeitungswerkzeuges 6 aus der Ausgangsposition. Der Hindernissensor 7, welcher hier exemplarisch als mechanischer Taster 7a ausgeführt ist, liegt in diesem Moment am Hindernis 4 an und erzeugt in diesem Zustand ein Sensorsignal, welches dann zum Zurückschwenken des Bodenbearbeitungswerkzeuges 6 führt.

Zwischen dem Hindernissensor 7 und dem Bodenbearbeitungswerkzeug 6 ergibt sich durch die Anordnung des Hindernissensors 7 in Fahrtrichtung vor dem Bodenbearbeitungswerkzeug 6 ein Abstand A zwischen Bodenbearbeitungswerkzeug 6 und Hindernissensor 7. Bei Fahrt in der Ebene ist dieser Abstand A ungefähr gleich dem Abstand B zwischen Bodenbearbeitungswerkzeug 6 und Hindernis 4. Unterschiede zwischen den Abständen A und B ergeben sich allenfalls durch den Durchmesser des als mechanischen Taster 7a ausgeführten Hindernissensor 7.

Nach einer gewissen Strecke x₁ schwenkt das Bodenbearbeitungswerkzeug 6 aus der zurückgeschwenkten Position wieder in seine Ausgangsposition zurück. Die Einstellung des Abstandes A zwischen Hindernissensor 7 und Bodenbearbeitungswerkzeug 6 wird so eingestellt das bei Zurückschwenken des Bodenbearbeitungswerkzeuges 6 aus seiner zurückgeschwenkten Position in die normale Arbeitsposition (Ausgangsposition) nach Zurücklegung der Wegstrecke x₁ im zurückgeklappten Zustand das Hindernis 4 bereits passiert wurde. Dies bedeutet dass es eine Wegstrecke C in Fahrtrichtung hinter dem Hindernis 4 gibt, in welcher das Bodenbearbeitungswerkzeug 6 sich noch im zurückgeklappten Zustand befindet. Wenn dies der Fall ist wurde das Hindernis 4 erfolgreich umfahren ohne eine Kollision mit dem Bodenbearbeitungswerkzeug 6 zu verursachen.

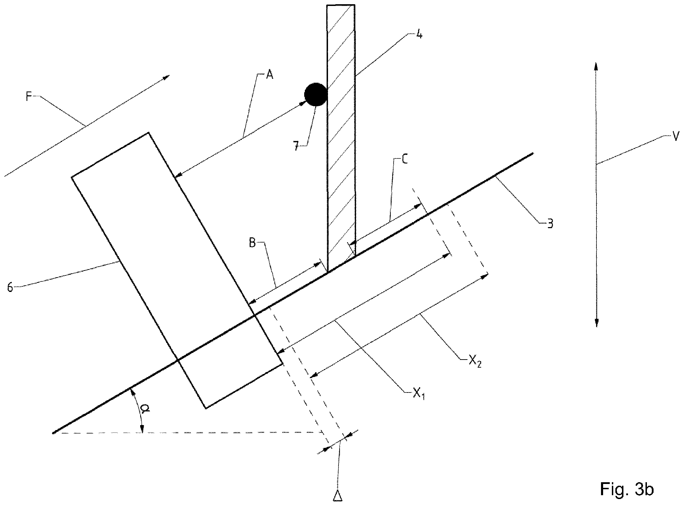

Probleme ergeben sich jedoch bei einem Hangwinkel α in Fahrtrichtung F. Der Fall einer Bergauffahrt ist in Figur 3b dargestellt. Dadurch, dass die landwirtschaftliche Maschine 1 mit dem landwirtschaftlichen Fahrzeug 2 nach wie vor auf dem Boden 3 fährt, die Pflanzen 4a, welche Hindernisse 4 darstellen, jedoch in einer parallel zu einer Vertikalrichtung V wachsen, welche auf den Bergmittelpunkt zuläuft, erscheint ein Hindernis 4 in Form einer Pflanze 4a in Fahrtrichtung F vom Bodenbearbeitungswerkzeug 6 nach vorne weggekippt.

Trifft nun die landwirtschaftliche Maschine 1 auf ein Hindernis 4 ergibt sich die Situation wie in Figur 3b dargestellt. Der Abstand A zwischen dem Hindernissensor 7 und dem Bodenbearbeitungswerkzeug 6 ist fest eingestellt und ändert sich durch den Hangwinkel α nicht. Bei Auftreffen des Hindernissensors 7 auf das Hindernis 4 ist durch den Hangwinkel α der Abstand B, gemessen, direkt am Boden 3, jedoch deutlich kürzer als der Abstand A zwischen Bodenbearbeitungswerkzeug 6 und Hindernissensor 7. Dies kann im Extremfall dazu führen das der Hindernissensor 7 das Hindernis 4 noch nicht erreicht hat während das Bodenbearbeitungswerkzeug 6 am Boden bereits mit dem Hindernis 4 oder mit einen darunter befindlichen Wurzelballen kollidiert. Dies kann zu einer Beschädigung des Bodenbearbeitungswerkzeuges 6 und/oder der Pflanze 4a oder den Hilfsmitteln 4b zur Reihenerziehung der Pflanzen 4a führen.

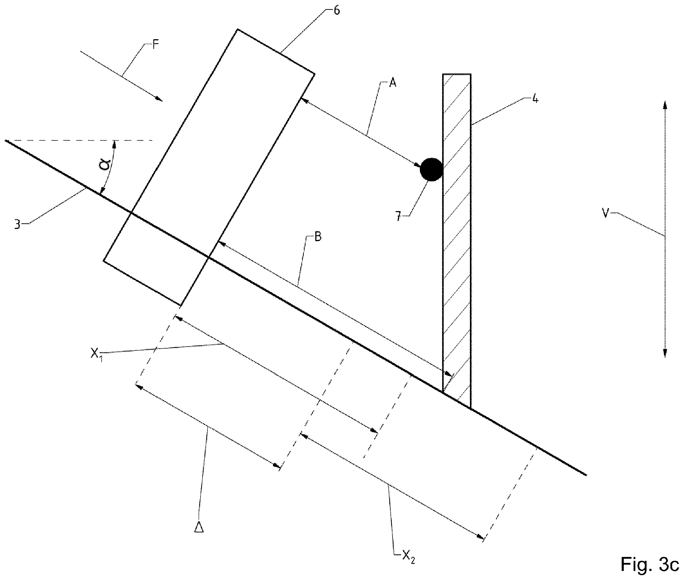

Figur 3c zeigt eine Bergabfahrt der landwirtschaftlichen Maschine 1 in Fahrtrichtung F auf einem Boden 3. Hier ergibt sich eine vergleichbar schlechte Situation wie bei der Bergauffahrt, welche zuvor beschrieben wurde. Wieder ist der Abstand A zwischen Bodenbearbeitungswerkzeug 6 und Hindernissensor 7 konstant. Durch den nun in der Bergabfahrt negativen Hangwinkel α ergibt sich jedoch eine Situation, in der das Hindernis 4 auf das Bodenbearbeitungswerkzeug zugekippt zu sein scheint. In diesem Fall ist nun der Abstand B zwischen Bodenbearbeitungswerkzeug 6 und Hindernis 4 gemessen nah am Boden 3 deutlich größer als der Abstand A zwischen Bodenbearbeitungswerkzeug 6 und Hindernissensor 7 bei Erreichen des Hindernisses 4 durch den Hindernissensor 7. Dies führt zu einem verfrühten Zurückschwenken des Bodenbearbeitungswerkzeuges 6, welches noch nicht nah genug an das Hindernis 4 heran gefahren ist.

Da das Bodenbearbeitungswerkzeug 6 immer nach einer bestimmten Zeit oder bevorzugt einer bestimmten Wegstrecke wieder in seine Ausgangsposition zurückkehrt ist es im Extremfall bei einer Bergabfahrt sogar möglich, dass das Bodenbearbeitungswerkzeug 6 bereits vor Passieren des Hindernisses 4 wieder in seine Ursprungsposition vorgeklappt wird, sodass es mit dem Hindernis 4 kollidiert.

Mit der erfindungsgemäßen Verzögerungsvorrichtung 10 und der Einstellvorrichtung 11 kann nun ein Zeitverzögerungsbetrag Δ eingestellt werden. Nach Detektion des Hindernisses 4 durch den Hindernissensor 7 findet das Zurückklappen des Bodenbearbeitungswerkzeuges 6 nun um den Zeitbetrag Δ verzögert statt. Je nachdem ob man sich in ebener Fahrt einer Bergauffahrt oder einer Bergabfahrt befindet, kann der Zeitverzögerungsbetrag Δ entsprechend eingestellt werden. Bevorzugt wird bei ebener Fahrt ein mittlerer Zeitverzögerungsbetrag Δ, bei Bergauffahrt ein kleinerer Zeitverzögerungsbetrag Δ und bei Bergabfahrt ein größerer Zeitverzögerungsbetrag Δ in der Verzögerungsvorrichtung 10 eingestellt, bezogen auf eine konstante Fahrgeschwindigkeit.

Durch die Zeitverzögerung Δ wird die Wegstrecke x, in welcher sich das Bodenbearbeitungswerkzeug 6 in einer zurückgeklappten Position befindet, verschoben. In den Figuren 3a - 3c markiert das Bezugszeichen x₁ die Wegstrecke, entlang welcher sich das Bodenbearbeitungswerkzeug ohne die Zeitverzögerungsvorrichtung 10 im zurückgeklappten Zustand befindet, und das Bezugszeichen x₂ den zurückgelegten Weg, entlang welchem sich das Bodenbearbeitungswerkzeug 6 mit der Zeitverzögerungsvorrichtung 10 im zurückgeklappten Zustand befindet. Durch den entsprechend eingestellten Zeitverzögerungsbetrag Δ wird die zurückgelegte Wegstrecke x₂ in welcher sich das Bodenbearbeitungswerkzeug 6 im zurückgeklappten Zustand befindet, immer optimal um das Hindernis herum platziert. Es kommt durch die Verzögerungsvorrichtung 10 somit nicht zu einer Kollision des Bodenbearbeitungswerkzeuges 6 mit dem Hindernis 4.

Der Zeitverzögerungsbetrag Δ ist bevorzugt kontinuierlich in einem Intervall einstellbar. Bevorzugt erfolgt die Berechnung des optimalen Zeitverzögerungsbetrags Δ durch die Steuerungsvorrichtung 8 in Abhängigkeit der Signale des Hindernissensors 7, der aktuellen Fahrgeschwindigkeit des Fahrzeugs 2 und der aktuellen die Position des Bodenbearbeitungswerkzeugs. Der Zeitverzögerungsbetrag Δ wird in Abhängigkeit dieser Parameter so berechnet, dass das Zurückschwenken in einer Distanz zum Hindernis 4 erfolgt, welche dem hinterlegten Distanzwert entspricht.

Zur Erfassung ob eine Bergauffahrt, eine Talfahrt oder eine Fahrt in der Ebene vorliegt, stellt der Führer der Maschine bevorzugt einen diesbezüglichen Regelwert manuell während der Bodenbearbeitungsfahrt ein. Insbesondere bevorzugt ist hier eine Ausführung als Schalter oder Raster mit drei verschiedenen Positionen, wobei eine mittlere Position der ebenen Fahrt zugeordnet ist und die beiden Außenpositionen jeweils einer Bergauffahrt und einer Bergabfahrt zugeordnet sind. Entsprechend der gewählten Raststellung wird dann ein entsprechender Zeitverzögerungsbetrag Δ berechnet und in der Verzögerungsvorrichtung 10 eingestellt.

Alternativ hierzu ist es auch denkbar, dass der Maschinenführer einen Regelwert einstellt, welcher die Steigung abbildet. Dies kann durch einen manuellen Regler erfolgen.

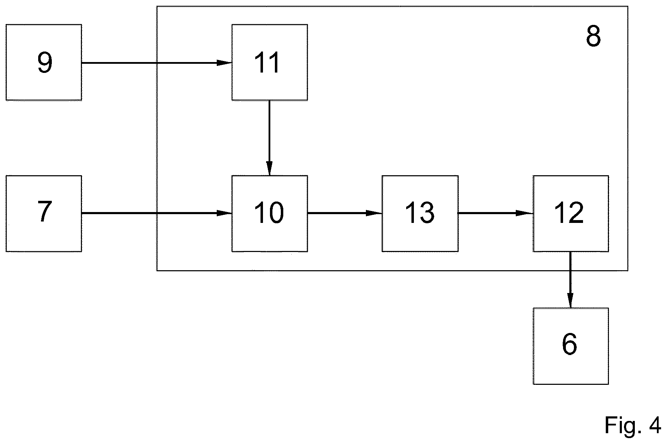

Bevorzugt umfasst die Maschine eine vollautomatische Einstellvorrichtung 11. Bei einer vollautomatischen Einstellvorrichtung 11 umfasst die landwirtschaftliche Maschine 1 bevorzugt einen Lagesensor 9. Mit dem Lagesensor 9 ist ein Hangwinkel α in Fahrtrichtung F bestimmbar. Der detektierte Hangwinkel α wird dann vom Lagesensor 9 an die Steuerungsvorrichtung 8 weitergegeben. Eine entsprechende Steuerungsvorrichtung 8 ist schematisch in Figur 4 abgebildet. Die Steuerungsvorrichtung 8 umfasst die Verzögerungsvorrichtung 10 mit der Einstellvorrichtung 11 sowie einen Signalgeber 13 und eine Schwenkvorrichtung 12. Mit der Schwenkvorrichtung 12 ist das Bodenbearbeitungswerkzeug 6 aus der Bearbeitungsposition in eine Ruheposition nach hinten schwenkbar.

Die Schwenkvorrichtung 12 ist bevorzugt ein einfach- oder doppeltwirkender Hydraulikzylinder. Die Schwenkvorrichtung 12 wird durch den Signalgeber 13 angesteuert. Alternativ kann die Schwenkvorrichtung 12 als Schiebeeinheit 12 ausgeführt sein. Gibt der Signalgeber 13 ein Signal an die Schwenkvorrichtung 12 wird das Bodenbearbeitungswerkzeug 6 in die Ruheposition nachhinten geklappt. Bevorzugt ist der Signalgeber 13 ein elektromagnetisches Ventil. In dieser Ausführungsform ist der Hindernissensor 7 lediglich mittelbar über die Verzögerungsvorrichtung 10 mit dem Signalgeber 13 verbunden. Dies bedeutet, dass ein Sensorsignal des Hindernissensors 7 nicht unmittelbar an den Signalgeber 13 weitergegeben wird (was ein unmittelbares Zurückschwenken des Bodenbearbeitungswerkzeuges 6 auslösen würde) sondern das Sensorsignal des Hindernissensors 7 zunächst in der Verzögerungsvorrichtung 10 verzögert wird, bevor es an den Signalgeber 13 weitergeleitet wird.

Der Zeitverzögerungsbetrag Δ, um den die Verzögerungsvorrichtung 10 das Sensorsignal des Hindernissensors 7 verzögert an den Signalgeber weitergibt, ist mit der Einstellvorrichtung 11 einstellbar. Mit dem Lagesensor wird der Hangwinkel α in Fahrtrichtung F ermittelt. Der ermittelte Hangwinkel α wird dann an die Steuervorrichtung 8 weitergeleitet, wo in Abhängigkeit des ermittelten Hangwinkels α, der aktuellen Fahrgeschwindigkeit des Fahrzeugs, und der aktuellen die Position des Bodenbearbeitungswerkzeugs ein optimaler Zeitverzögerungsbetrag Δ ermittelt wird, welcher ein Zurückschwenken in einem Abstand zum Hindernis, welcher dem eingestellten Distanzwert entspricht, sicherstellt.

Bevorzugt wird bezogen auf eine konstante Fahrgeschwindigkeit bei Detektion eines Hangwinkels α, welcher einer Bergauffahrt entspricht, ein verringerter Zeitverzögerungsbetrag mithilfe der Einstellvorrichtung 11 eingestellt und bei Detektion eines Hangwinkel α welche einer Bergabfahrt entspricht mithilfe der Einstellvorrichtung 11 ein vergrößerter Zeitverzögerungsbetrag Δ eingestellt. Bevorzugt findet die Einstellung des Zeitverzögerungsbetrages Δ in Abhängigkeit des Hangwinkels α nicht nur qualitativ also unterschieden nach Bergauf,- oder Bergabfahrt statt. Vielmehr wird der Zeitverzögerungsbetrag Δ bevorzugt durch eine mathematische Funktion mit dem detektierten Hangwinkel α als Variable, besonders bevorzugt proportional zum detektierten Hangwinkel α vergrößert oder verringert. Die Detektion des Hangwinkels α durch den Lagesensor 9 findet bevorzugt kontinuierlich statt, sodass jederzeit der optimale Zeitverzögerungsbetrag Δ für den momentanen Hangwinkel α mit der Einstellvorrichtung 11 in der Verzögerungsvorrichtung 10 eingestellt ist und das Zurückschwenken immer in der korrekten Distanz zum Hindernis 4 stattfindet.

### Bezugszeichenliste

- 1: landwirtschaftliche Maschine
- 2: landwirtschaftliches Fahrzeug
- 3: Boden
- 3a: Bodenbereich
- 4: Hindernisse
- 4a: Pflanzen
- 4b: Pflanzstock
- 5: Reihenkultur
- 6: Bodenbearbeitungswerkzeug
- 7: Hindernissensor
- 7a: mechanischer Taster
- 7b: kontaktloser Sensor
- 8: Steuerungsvorrichtung
- 9: Lagesensor
- 10: Verzögerungsvorrichtung
- 11: Einstellvorrichtung
- 11a: Regler
- 12: Schwenkvorrichtung/Schiebeeinheit
- 13: Signalgeber

- A: Abstand Taster - Bodenbearbeitungswerkzeug
- B: Abstand Hindernis - Bodenbearbeitungswerkzeug
- C: Wegstrecke bis zum Zurückschwenken nach Hindernis
- D: Drehachse
- F: Fahrtrichtung
- H: Höhenrichtung
- Q: Querrichtung
- V: Vertikalrichtung
- α: Hangwinkel
- Δ: Zeitverzögerungsbetrag

## Patentansprüche

1. Landwirtschaftliche Maschine (1) zur Anordnung an ein landwirtschaftliches Fahrzeug (2), wobei bei Bewegung der Maschine (1) in Fahrtrichtung Fein Bodenbereich (3a) zumindest zwischen parallel zur Fahrtrichtung (F) angeordneten Pflanzen (4a) in Reihenkulturen (5) mit der Maschine (1) bearbeitbar ist, wobei die Maschine (1)
- ein Bodenbearbeitungswerkzeug (6), welches um eine in einer Höhenrichtung (H) der Maschine (1) verlaufende Drehachse (D) aus einer senkrecht zur Fahrtrichtung (F) und senkrecht zur Höhenrichtung (H) angeordneten Querrichtung (Q) entgegengesetzt zur Fahrtrichtung (F) zurückschwenkbar und/oder in Querrichtung (Q) zur Maschine (1) hinbewegbar ist,
- ein Hindernissensor (7), mit welchem Hindernisse (4), insbesondere Pflanzen (4a) und Pflanzstöcke (4b) der Reihenkultur (5), detektierbar sind,
- sowie eine Steuerungsvorrichtung (8) umfasst,
wobei das Bodenbearbeitungswerkzeug (6) durch die Steuerungsvorrichtung (8) bei Detektion eines Hindernisses (4) aus der Querrichtung (Q) entgegengesetzt zur Fahrtrichtung (F) zurückschwenkbar ist und/oder in Querrichtung (Q) zur Maschine hinbewegbar ist,
**dadurch gekennzeichnet, dass**
die Steuerungsvorrichtung (8) eine Verzögerungsvorrichtung (10), welche das Zurückschwenken und/oder das Hinbewegen zur Maschine (1) nach Detektion eines Hindernisses (4) verzögert, und eine Einstellvorrichtung (11) umfasst, wobei mit der Einstellvorrichtung (11) ein Zeitverzögerungsbetrag (Δ) der Verzögerungsvorrichtung (10) während einer Bodenbearbeitungsfahrt einstellbar ist.

2. Landwirtschaftliche Maschine (1) nach Anspruch 1,
**dadurch gekennzeichnet, dass**
die Verzögerungsvorrichtung (10) als Regelelektronik ausgeführt ist.

3. Landwirtschaftliche Maschine (1) nach Anspruch 1 oder 2,
**dadurch gekennzeichnet, dass**
in der Steuerungsvorrichtung neben den Signalen des Hindernissensors auch die aktuelle Fahrgeschwindigkeit des Fahrzeugs, die Zeit und die aktuelle die Position des Bodenbearbeitungswerkzeugs erfasst wird und weitergehend ein Distanzwert hinterlegt ist.

4. Landwirtschaftliche Maschine (1) nach zumindest einem der vorhergehenden Ansprüche,
**dadurch gekennzeichnet, dass**
die Steuerungsvorrichtung (8) eine Schwenkvorrichtung (12), mit welcher das Bodenbearbeitungswerkzeug (6) schwenkbar ist, oder als eine lineare Schiebeeinheit (12), mit welcher das Bodenbearbeitungswerkzeug (6) bewegbar ist, und einen steuerbaren Signalgeber (13) umfasst, mit welchem die Schwenkvorrichtung (12) ansteuerbar ist, wobei der Signalgeber (13) lediglich mittelbar über die Verzögerungsvorrichtung (10) mit dem Hindernissensor (7) verbunden ist.

5. Landwirtschaftliche Maschine (1) nach zumindest einem der vorhergehenden Ansprüche,
**dadurch gekennzeichnet, dass**
mit der Einstellvorrichtung (11) der Zeitverzögerungsbetrag (Δ) kontinuierlich innerhalb eines Intervalls einstellbar ist.

6. Landwirtschaftliche Maschine (1) nach zumindest einem der vorhergehenden Ansprüche,
**dadurch gekennzeichnet, dass**
die Einstellvorrichtung (11) mit einem während der Bodenbearbeitungsfahrt manuell betätigbarem Regler (11a) steuerbar ist.

7. Landwirtschaftliche Maschine (1) nach zumindest einem Ansprüche 1 - 5,
**dadurch gekennzeichnet, dass**
die Maschine (1) weitergehend einen Lagesensor (9) umfasst, mit welchem ein Hangwinkel (α) in Fahrtrichtung (F) fortlaufend messbar ist, wobei mit der Einstellvorrichtung (11) der Zeitverzögerungsbetrag (Δ) automatisch und dynamisch in Abhängigkeit des Hangwinkels (α) einstellbar ist.

8. Landwirtschaftliche Maschine (1) nach Anspruch 7,
**dadurch gekennzeichnet, dass**
der Lagesensor (9) an der Schwenkvorrichtung (12) oder linearen Schiebeeinheit (12) des Bodenbearbeitungswerkzeugs (6) angeordnet ist.

9. Landwirtschaftliche Maschine (1) nach zumindest einem der vorhergehenden Ansprüche,
**dadurch gekennzeichnet, dass**
der Hindernissensor (7) als mechanischer Taster (7a) ausgeführt ist, wobei eine Detektion eines Hindernisses (4) bei Überschreitung einer Mindestbetätigung des Tasters (7a) erfolgt.

10. Landwirtschaftliche Maschine (1) nach Anspruch 9,
**dadurch gekennzeichnet, dass**
der Taster (7a) als von der Fahrtrichtung (F) in die Querrichtung (Q) und parallel zu einem Boden (3) rotierbarer Stab ausgeführt ist, wobei die Mindestbetätigung einem Mindestdrehwinkel entspricht.

11. Landwirtschaftliche Maschine (1) nach einem der Ansprüche 1 - 8,
**dadurch gekennzeichnet, dass**
der Hindernissensor (7) als kontaktloser Sensor (7b) ausgeführt ist.

12. Verfahren zum Steuern eines Bodenbearbeitungswerkzeugs (6) einer landwirtschaftlichen Maschine (1) nach zumindest einem der vorhergehenden Ansprüche, umfassend die Schritte:
a. Einstellen des Zeitverzögerungsbetrags (Δ) zwischen der Detektion eines Hindernisses (4) und dem Zurückschwenken und/oder Hinbewegen des Bodenbearbeitungswerkzeugs (6) mit Hilfe der Einstellvorrichtung (11) während einer Bodenbearbeitungsfahrt;
b. Detektion eines Hindernisses (4) mit dem Hindernissensor (7);
c. Zeitliche Verzögerung des Zurückschwenkens und/oder Hinbewegen des Bodenbearbeitungswerkzeugs (6) mit Hilfe der Verzögerungsvorrichtung (10) um den zuvor eingestellten Zeitverzögerungsbetrag (Δ);
d. Zurückschwenken und/oder Hinbewegen des Bodenbearbeitungswerkzeugs (6) mit Hilfe der Steuerungsvorrichtung (8).

13. Verfahren nach Anspruch 12,
**dadurch gekennzeichnet, dass**
das Einstellen des Zeitverzögerungsbetrags (Δ) während der Bodenbearbeitungsfahrt an der Einstellvorrichtung (11) in Abhängigkeit eines durch einen Führer der landwirtschaftlichen Maschine (1) manuell eingestellten Regelwert erfolgt.

14. Verfahren nach Anspruch 12,
**dadurch gekennzeichnet, dass**
die landwirtschaftliche Maschine (1) einen Lagesensor (9) umfasst, mit welchem ein Hangwinkel (α) in Fahrtrichtung (F) fortlaufend gemessen wird und der Zeitverzögerungsbetrag (Δ) fortlaufend automatisch in Abhängigkeit des Hangwinkels (α) mit der Einstellvorrichtung (11) eingestellt wird.

15. Verfahren nach einem der Ansprüche 12-14,
**dadurch gekennzeichnet, dass**
im Vergleich zum eingestellten Zeitverzögerungsbetrag (Δ) bei ebener Fahrt und konstanter Fahrgeschwindigkeit, bei einer Bergauffahrt der Zeitverzögerungsbetrag (Δ) mit Hilfe der Einstellvorrichtung (11) verringert und bei einer Bergabfahrt der Zeitverzögerungsbetrag (Δ) mit Hilfe der Einstellvorrichtung (11) vergrößert wird.

## Claims

1. Agricultural machine (1) for mounting on an agricultural vehicle (2), wherein, when the machine (1) is moved in the driving direction (F), a soil area (3a) at least between plants (4a) arranged parallel to the driving direction (F) can be worked in row crops (5) with the machine (1), the machine (1) having
- a soil cultivating tool (6) which can be pivoted back about an axis of rotation (D) running in a height direction (H) of the machine (1) from a transverse direction (Q) arranged perpendicular to the driving direction (F) and perpendicular to the height direction (H) in the opposite direction to the driving direction (F) and/or can be moved towards the machine (1) in the transverse direction (Q),
- an obstacle sensor (7) with which obstacles (4), in particular plants (4a) and planting sticks (4b) of the row crop (5), can be detected,
- as well as a control device (8),
wherein the soil cultivating tool (6) can be pivoted back out of the transverse direction (Q) in the opposite direction to the driving direction (F) by the control device (8) upon detection of an obstacle (4) and/or can be moved towards the machine in the transverse direction (Q),
**characterized in that**
the control device (8) comprises a delay device (10), which delays the pivoting back and/or the moving towards the machine (1) after detection of an obstacle (4), and an adjusting device (11), wherein a time delay amount (Δ) of the delay device (10) during a soil cultivation drive can be adjusted with the adjusting device (11).

2. agricultural machine (1) according to claim 1,
**characterized in that**
the delay device (10) is designed as control electronics.

3. Agricultural machine (1) according to claim 1 or 2,
**characterized in that**
in the control device, in addition to the signals of the obstacle sensor, the actual driving speed of the vehicle, the time and the current position of the soil cultivation tool are also recorded and, furthermore, a distance value is stored.

4. Agricultural machine (1) according to at least one of the preceding claims,
**characterized in that**
the control device (8) comprises a pivoting device (12), with which the soil working tool (6) can be pivoted, or as a linear sliding unit (12), with which the soil working tool (6) can be moved, and a controllable signal transmitter (13), with which the pivoting device (12) can be actuated, the signal transmitter (13) being connected to the obstacle sensor (7) only indirectly via the delay device (10).

5. Agricultural machine (1) according to at least one of the preceding claims,
**characterized in that**
the time delay amount (Δ) is continuously adjustable within an interval by means of the adjusting device (11).

6. Agricultural machine (1) according to at least one of the preceding claims,
**characterized in that**
the adjusting device (11) is controllable by a controller (11a) which is manually operable during the soil cultivation drive.

7. Agricultural machine (1) according to at least one of claims 1 - 5,
**characterized in that**
the machine (1) further comprises a position sensor (9), with which a slope angle (α) can be continuously measured in the driving direction (F), wherein the time delay amount (Δ) can be automatically and dynamically set with the setting device (11) as a function of the slope angle (α).

8. agricultural machine (1) according to claim 7,
**characterized in that**
the position sensor (9) is arranged on the pivoting device (12) or linear sliding unit (12) of the soil cultivating tool (6).

9. agricultural machine (1) according to at least one of the preceding claims,
**characterized in that**
the obstacle sensor (7) is designed as a mechanical sensor (7a), with an obstacle (4) being detected when a minimum actuation of the mechanical sensor (7a) is exceeded.

10. agricultural machine (1) according to claim 9,
**characterized in that**
the mechanical sensor (7a) is designed as a rod rotatable from the driving direction (F) in the transverse direction (Q) and parallel to a soil (3), the minimum actuation corresponding to a minimum angle of rotation.

11. agricultural machine (1) according to any one of claims 1 - 8,
**characterized in that**
the obstacle sensor (7) is designed as a contactless sensor (7b).

12. method for controlling a soil cultivation tool (6) of an agricultural machine (1) according to at least one of the preceding claims,
comprising the steps:
a. Adjusting the time delay amount (Δ) between the detection of an obstacle (4) and the swinging back and/or moving towards it of the soil working tool (6) by means of the adjusting device (11) during a soil working drive;
b. Detection of an obstacle (4) with the obstacle sensor (7);
c. Time delaying the swinging back and/or moving towards of the ground working tool (6) with the help of the delaying device (10) by the previously set time delay amount (Δ);
d. Swinging back and/or moving towards each other the soil working tool (6) with the aid of the control device (8).

13. method according to claim 12,
**characterized in that**
the setting of the time delay amount (Δ) during the soil cultivation drive is carried out at the setting device (11) in dependence on a control value manually set by an operator of the agricultural machine (1).

14. method according to claim 12,
**characterized in that**
the agricultural machine (1) comprises a position sensor (9) with which a slope angle (α) in the driving direction (F) is continuously measured and the time delay amount (Δ) is continuously set automatically as a function of the slope angle (α) with the adjusting device (11).

15. method according to any one of claims 12-14,
**characterized in that**
in comparison with the set time delay amount (Δ) during level driving and constant driving speed, the time delay amount (Δ) is reduced with the aid of the setting device (11) during uphill driving and the time delay amount (Δ) is increased with the aid of the setting device (11) during downhill driving.

## Revendications

1. Machine agricole (1) destinée à être montée sur un véhicule agricole (2), dans laquelle, lors du déplacement de la machine (1) dans la direction de déplacement (F), une zone de sol (3a) peut être travaillée par la machine (1) au moins entre des plantes (4a) disposées parallèlement à la direction de déplacement (F) dans des cultures en rangs (5), la machine (1) comprenant
- un outil de travail du sol (6) qui peut être pivoté en arrière autour d'un axe de rotation (D) s'étendant dans une direction de hauteur (H) de la machine (1) à partir d'une direction transversale (Q) disposée perpendiculairement à la direction de déplacement (F) et perpendiculairement à la direction de hauteur (H), dans le sens opposé à la direction de déplacement (F) et/ou qui peut être déplacé vers la machine (1) dans la direction transversale (Q),
- un capteur d'obstacles (7), avec lequel des obstacles (4), en particulier des plantes (4a) et des tuteurs (4b) de la culture en ligne (5), peuvent être détectés,
- ainsi qu'un dispositif de commande (8),
l'outil de travail du sol (6) pouvant être pivoté en arrière par le dispositif de commande (8) en cas de détection d'un obstacle (4) à partir de la direction transversale (Q) dans le sens opposé à la direction de déplacement (F) et/ou pouvant être déplacé vers la machine dans la direction transversale (Q),
**caractérisé en ce que**
le dispositif de commande (8) comprend un dispositif de temporisation (10) qui retarde le pivotement vers l'arrière et/ou le déplacement vers la machine (1) après détection d'un obstacle (4), et un dispositif de réglage (11), le dispositif de réglage (11) permettant de régler une valeur de temporisation (Δ) du dispositif de temporisation (10) pendant un déplacement de travail du sol.

2. Machine agricole (1) selon la revendication 1,
**caractérisé en ce que**
le dispositif de décélération (10) est réalisé sous la forme d'un système électronique de régulation.

3. Machine agricole (1) selon la revendication 1 ou 2,
**caractérisé en ce que**
dans le dispositif de commande, outre les signaux du capteur d'obstacles, la vitesse de déplacement actuelle du véhicule, le temps et la position actuelle de l'outil de travail du sol sont enregistrés et une valeur de distance est en outre mémorisée.

4. Machine agricole (1) selon au moins l'une des revendications précédentes,
**caractérisé en ce que**
le dispositif de commande (8) comprend un dispositif de pivotement (12), avec lequel l'outil de travail du sol (6) peut pivoter, ou une unité de poussée linéaire (12), avec laquelle l'outil de travail du sol (6) peut être déplacé, et un générateur de signaux (13) pouvant être commandé, avec lequel le dispositif de pivotement (12) peut être commandé, le générateur de signaux (13) n'étant relié qu'indirectement au capteur d'obstacles (7) par l'intermédiaire du dispositif de temporisation (10).

5. Machine agricole (1) selon au moins l'une des revendications précédentes,
**caractérisé en ce que**
le dispositif de réglage (11) permet de régler la valeur de la temporisation (Δ) en continu à l'intérieur d'un intervalle.

6. Machine agricole (1) selon au moins une des revendications précédentes,
**caractérisé en ce que**
le dispositif de réglage (11) peut être commandé par un régulateur (11a) pouvant être actionné manuellement pendant le trajet de travail du sol.

7. Machine agricole (1) selon au moins l'une des revendications 1 à 5,
**caractérisé en ce que**
la machine (1) comprend en outre un capteur de position (9) avec lequel un angle de pente (α) peut être mesuré en continu dans le sens de la marche (F), le dispositif de réglage (11) permettant de régler automatiquement et dynamiquement la valeur de la temporisation (Δ) en fonction de l'angle de pente (α).

8. Machine agricole (1) selon la revendication 7,
**caractérisé en ce que**
le capteur de position (9) est disposé sur le dispositif de pivotement (12) ou l'unité de poussée linéaire (12) de l'outil de travail du sol (6).

9. Machine agricole (1) selon au moins une des revendications précédentes,
**caractérisé en ce que**
le capteur d'obstacle (7) est réalisé sous la forme d'un palpeur mécanique (7a), une détection d'un obstacle (4) ayant lieu en cas de dépassement d'un actionnement minimal du palpeur (7a).

10. Machine agricole (1) selon la revendication 9,
**caractérisé en ce que**
le palpeur (7a) est réalisé sous la forme d'une tige pouvant tourner dans le sens transversal (Q) par rapport au sens d'avancement (F) et parallèlement à un sol (3), l'actionnement minimal correspondant à un angle de rotation minimal.

11. Machine agricole (1) selon l'une quelconque des revendications 1 à 8,
**caractérisé en ce que**
le capteur d'obstacle (7) est réalisé sous la forme d'un capteur sans contact (7b).

12. Procédé de commande d'un outil de travail du sol (6) d'une machine agricole (1) selon au moins l'une des revendications précédentes,
comprenant les étapes suivantes :
a. Réglage de la valeur de la temporisation (Δ) entre la détection d'un obstacle (4) et le pivotement vers l'arrière et/ou le déplacement vers l'avant de l'outil de travail du sol (6) à l'aide du dispositif de réglage (11) pendant un déplacement de travail du sol;
b. Détection d'un obstacle (4) à l'aide du capteur d'obstacle (7);
c. Retard temporel du pivotement vers l'arrière et/ou du déplacement vers l'avant de l'outil de travail du sol (6) à l'aide du dispositif de retard (10) de la valeur de retard temporel (Δ) réglée au préalable;
d. Pivoter en arrière et/ou déplacer en avant l'outil de travail du sol (6) à l'aide du dispositif de commande (8).

13. Procédé selon la revendication 12,
**caractérisé en ce que**
le réglage de la valeur de la temporisation (Δ) pendant le déplacement de travail du sol est effectué au niveau du dispositif de réglage (11) en fonction d'une valeur de régulation réglée manuellement par un conducteur de la machine agricole (1).

14. Procédé selon la revendication 12,
**caractérisé en ce que**
la machine agricole (1) comprend un capteur de position (9) permettant de mesurer en continu un angle de pente (α) dans le sens d'avancement (F) et de régler en continu et automatiquement la valeur du retard (Δ) en fonction de l'angle de pente (α) avec le dispositif de réglage (11).

15. Procédé selon l'une quelconque des revendications 12 à 14,
**caractérisé en ce que**
par rapport à la valeur de temporisation (Δ) réglée en conduite à plat et à vitesse de conduite constante, en montée, on diminue la valeur de temporisation (Δ) à l'aide du dispositif de réglage (11) et en descente, on augmente la valeur de temporisation (Δ) à l'aide du dispositif de réglage (11).
